# EUROPEAN PATENT APPLICATION

(11) **EP 4 696 832 A1**
(43) Date of publication of application: **18.02.2026**
(21) Application number: 24194924.7
(22) Date of filing: 16.08.2024
(51) Int. Cl.: D06P 1/54, D06P 1/00, C09D 11/328, D06P 1/52, D06P 5/30

(54) **COLOURING COMPOSITION FOR THE PRINTING AND/OR DYEING OF TEXTILES, METHOD FOR THE PRINTING AND/OR DYEING OF TEXTILES, AND PRINTED SUBSTRATE**

(71) Applicant: EcoFusions GmbH i.Gr., 54497 Morbach (DE)
(72) Inventor: STEVENINCK, Etienne, 54497 Morbach (DE)
(74) Representative: Fuchs Patentanwälte Partnerschaft mbB

(57) **Abstract**

This disclosure relates to a colouring composition for the printing and/or dyeing of textiles, a method for the printing and/or dyeing of textiles, and a printed substrate. The colouring compositions according to this disclosure are stable and provide for long-lasting products. The method for the printing and/or dyeing of textiles reacts the colouring compositions in a single process step onto the textiles and does not require any steaming and/or washing steps.

## Description

This disclosure relates to a colouring composition for the printing and/or dyeing of textiles, a method for the printing and/or dyeing of textiles, and a printed substrate. The colouring compositions according to this disclosure are stable and provide for long-lasting products. The method for the printing and/or dyeing of textiles reacts the colouring compositions in a single process step onto the textiles and does not require any steaming and/or washing steps.

### Background of the Disclosure

Colouring compositions for a variety of applications are known in the art, e.g., for printing and/or dyeing of textile materials. The two most common categories of colouring agents include organic dyes and inorganic pigments, each having their specific advantages and disadvantages.

Dye molecules penetrate the textile fiber and are integrated via a number of interactions. Dyed textile materials feel soft and are thus desired for clothing. On the downside, inkjet textile printing using dyes requires the initial coating of the textile material with a printing paste to prevent bleeding of the dye, and to thereby improve the sharpness. After the dyeing step, the coloured textile material needs to be heated, for example with steam, in order to permanently fix the dye onto the textile fibres. In a subsequent step, excess dye and printing paste need to be washed off by rinsing or soaping. This general approach is therefore cumbersome, resource-intensive and generates waste fluid.

A further challenge remains in that dyes need to be matched to the type of fiber. For example, reactive dyes or direct dyes are used for cellulose fibre, such as cotton and hemp, acid dyes are used for animal fibres, such as wool and silk, acid dyes or disperse dyes are used for nylon fibre, disperse dyes are used for polyester fiber, and cationic dyes are used for acrylic fiber.

WO 2022/208112 A1 discloses water-based polymeric colourant inks, i.e., a printing ink comprising one or more solution-soluble polymeric colourant(s), one or more acid-functional polymer(s), water and one or more organic co-solvent(s), wherein the polymeric colourant(s) comprises polymer chains having at least one hydroxyl (-OH), thiol (-SH) or primary or secondary amino (-NH₂ or -NHR) group on the polymer chain, wherein the inks are suitable for inkjet deposition.

EP 1 056 703 B1 describes the synthesis of polymeric colourants incorporating an organic chromophore, a poly-isocyanate and either a carboxylic acid or sulfonic acid into a polymeric colourant molecule which is water-soluble. EP 1 056 703 B1 specifically describes polymeric colourants containing urethane bonds that can be made into inkjet inks with water, a diluent and a binder. The type of binder used is not disclosed. EP 1 056 703 B1 also describes that the isocyanate-containing polymer reactive groups are particularly good at binding to the -OH groups of paper and textile fabrics. The -OH groups of the polymeric colorant (when present) can be linked with either an ester linker or via a (optional) CDI (1,1'-carbonyldiimidazole) cross-linker to a binder having acid functionality. The acid functionality of the binder can further react with more CDI cross-linkers (if present) or via an ester linker with the -OH groups of cellulosic substrates and indeed be cured on the surface of such substrates. In EP 1 056 703 B1, the reactive functional groups are isocyanates which are known for their limited storage stabilities and can decompose leading to incomplete fixation on the substrates.

EP 3 492 651 B1 discloses an inkjet textile printing method with a step of performing direct printing on a textile by an inkjet method with an inkjet ink based on an aqueous dispersion of a dye polymer with a structure derived from a xanthene skeleton. EP 3 492 651 B1 discloses an additional heat treatment step to melt (or soften) dye polymer particles to improve adhesiveness to the fibre. Colored cloths after being dried are preferably heat-treated for the purpose of achieving the melt-dyeing, at 100 °C to 250 °C. In this heat treatment step, a reactive group introduced into the dye polymer, or a crosslinking agent used as an additive to the dye polymer is used to cause a crosslinking reaction from the viewpoint of abrasion resistance. The dye polymer incorporates polyurethane which is sticky and thereby adheres to the textile.

There remains a need for colouring compositions which are stable and provide for long-lasting products based thereon and which can be applied in a single step for the printing and/or dyeing of textiles. Additionally, there is a strong desire to provide more sustainable processes for printing and/or dyeing of textiles which are less water-consuming, and which place less burden on the environment.

### Summary of the Disclosure

In one aspect, this disclosure provides a colouring composition for the printing and/or dyeing of textiles, e.g., cotton, polyester, polyamide, viscose, aramid, and meta-aramid, comprising:
a) a crosslinking agent;
b) an organic chromophore; and
c) water,

wherein the crosslinking agent comprises two or more protected isocyanate groups,
wherein the organic chromophore comprises at least one of the functional groups selected from a primary amine group, a secondary amine group, a hydroxyl group, and a thiol group,
wherein the colouring composition comprises 0.1 to 25 wt.% of the crosslinking agent, 0.1 to 25 wt.% of the organic chromophore, and at least 20.0 wt.% water; and/or wherein the stoichiometric ratio between the organic chromophore and the crosslinking agent is less than 1.0.

The colouring composition according to this disclosure allows printing and/or dyeing of textiles without the need for steaming and washing. The crosslinking agent provides for a direct or covalent bond connecting the textile fibers with the organic chromophore, which may involve the formation of single or double bonds to ensure a robust and permanent attachment of the organic chromophore to the textile fibers. The colouring composition is reactive which sets it apart from most conventional inks and colorants. Despite the reactivity, the colouring composition is stable by virtue of protection of the isocyanate groups and has an excellent shelf-life of several months and can thus be stored and shipped and can even be retained in the printhead during the application process.

The colouring composition according to this disclosure does not comprise polymeric components and has a low viscoelasticity which is advantageous for avoiding plugging of the nozzles as part of the application to textile materials. In contrast, approaches known in the art often rely on polymeric colourants which tend to precipitate which causes plugging of the nozzles. Additionally, colouring compositions with polymeric components tend to dry out. Many polymeric components harden the textile fibres, whereas the colouring composition according to this disclosure guarantees that the coloured textile fibres remain soft.

In a related aspect, this disclosure provides a colouring composition for the printing and/or dyeing of textiles, e.g., cotton, polyester, polyamide, viscose, aramid, and meta-aramid, comprising:
a) a crosslinking agent;
b) an organic chromophore;
c) water; and
d) an antimigration agent,

wherein the crosslinking agent comprises two or more protected isocyanate groups,
wherein the organic chromophore comprises at least one of the functional groups selected from a primary amine group, a secondary amine group, a hydroxyl group, and a thiol group,
wherein the colouring composition comprises 0.1 to 25 wt.% of the crosslinking agent, 0.1 to 25 wt.% of the organic chromophore, and at least 20.0 wt.% water; and/or wherein the stoichiometric ratio between the organic chromophore and the crosslinking agent is less than 1.0.

In an alternative aspect, this disclosure provides a colouring composition for the printing and/or dyeing of textiles, e.g., cotton, polyester, polyamide, viscose, aramid, and meta-aramid, comprising:
a) an alternative crosslinking agent;
b) an organic chromophore; and
c) water,

wherein the alternative crosslinking agent has the Markush formula R¹-(N=C=N)-L'-(N=C=N)-R²,
wherein optionally L' is a substituted or unsubstituted linear, branched, or cyclic alkylene group having 1 to 30 carbon atoms, a substituted or unsubstituted arylene group having 4 to 30 carbon atoms, a substituted or unsubstituted heterocyclic group having 4 to 30 carbon atoms, wherein the substituted or unsubstituted heterocyclic group comprises -O-, -S-, and/or -NR-, where R represents a hydrogen atom, an alkyl group, an aryl group, or a heterocyclic group, - C(=O)-, -SO-, or -SO₂-, or -CH=CH-, or a combination of two or more of the foregoing structures,
wherein optionally R¹ and R² are independently of each other a substituted or unsubstituted linear, branched, or cyclic alkylene group having 1 to 30 carbon atoms,
wherein the organic chromophore comprises at least one of the functional groups selected from a primary amine group, a secondary amine group, a hydroxyl group, and a thiol group,
wherein the colouring composition comprises 0.1 to 25 wt.% of the alternative crosslinking agent, 0.1 to 25 wt.% of the organic chromophore, and at least 20.0 wt.% water; and/or wherein the stoichiometric ratio between the organic chromophore and the alternative crosslinking agent is less than 1.0.

The inclusion of an antimigration agent into the colouring composition according to this disclosure prevents migration of the dye molecules during intermediate drying so that shade variations, e.g., between front and back parts, as well as centre-selvage are prevented.

In one aspect, this disclosure provides a method for the printing and/or dyeing of textiles comprising:
- depositing the colouring composition according to this disclosure onto a textile substrate;
- drying and/or squeezing of the textile substrate to remove water; and
- reacting the colouring composition by heat transfer to obtain a covalently modified textile substrate.

Whereas the colouring composition itself comprises water, the application of the colouring composition to textiles is performed using a non-aqueous application technique. Heat transfer initiates a fixation process, for example by utilizing hot air, by activating the crosslinking agent which in effect forms covalent bonds with both the organic chromophore and the textile fibers which ensures a permanent colouration. The method according to this disclosure advantageously does not require water or steam as a processing medium. In the art, textile fabrics are typically pre-washed before dyeing and/or printing to remove any possible contaminations. These measures have been coined as "prepared for dyeing" (PFD) or "prepared for printing" (PFT). Advantageously, the process according to this disclosure does not require and/or does not comprise any washing steps, neither before nor after the depositing of the colouring composition onto the substrate. This approach represents a significant advancement in reducing water usage in textile processing. Additionally, the required energy to dye the textile is strongly decreased thanks to a faster and better fixing approach of the employed crosslinking agent as part of the colouring composition.

In one aspect, this disclosure provides a printed textile substrate comprising the reacted colouring composition according to this disclosure printed thereon.

In one aspect, this disclosure provides a modified textile substrate obtainable by the method according to this disclosure.

In one aspect, this disclosure provides a use of the colouring composition according to this disclosure for the printing and/or dyeing of textiles, e.g., cotton, polyester, polyamide, viscose, aramid, and meta-aramid.

Textiles treated with the colouring composition according to this disclosure exhibit unparalleled colour fastness, durability, and resistance to environmental stress due to permanent chemical bonding of the organic chromophores to the textile fibers. This durability is achieved through a specialised chemical linkage which provides enhanced performance and environmental friendliness. The employed crosslinking agent ensures that the textile colour remains vibrant and resistant to washing, abrasion, and environmental degradation.

Additionally, the components of the colouring composition according to this disclosure may be chosen such that the product is entirely biodegradable and thus environmentally sustainable. The components of the colouring composition may be non-toxic and satisfy OSHA (Occupational Safety and Health Administration) standards for safe use.

The colouring composition according to this disclosure is designed in such a way to allow splitting the production process into two spatially and temporally separated steps. The colouring composition according to this disclosure is stable and has a sufficiently long shelf life which allows shipping, storage, and remote application.

Textile products treated with the colouring composition according to this disclosure find a broad range of applications, from fashion and apparel to home furnishings and industrial materials, which demonstrates the versatility and adaptability of the disclosed colouring composition.

### Detailed Description

This disclosure provides a groundbreaking approach for the printing and/or dyeing of textiles. Based on the disclosed colouring composition it becomes possible to perform waterless colouring because no additional water is needed in the method for the printing and/or dyeing of textiles. This approach minimises the environmental impact and provides an efficient and sustainable method for achieving permanent colouration. The approach is based on a direct covalent bonding mechanism, facilitated by a simple heat fixation process, and provides a durable, ecofriendly alternative to conventional dyeing techniques. The elimination of any need for water during the colouring process provides a very cost- and energy-efficient colouring composition and method. Accordingly, the generation of wastewater is heavily reduced, and air pollution from heating and drying is reduced to a minimum.

### Colouring composition

In one aspect, this disclosure provides a colouring composition for the printing and/or dyeing of textiles, e.g., cotton, polyester, polyamide, viscose, aramid, and meta-aramid, comprising:
a) a crosslinking agent;
b) an organic chromophore; and
c) water,

wherein the crosslinking agent comprises two or more protected isocyanate groups,
wherein the organic chromophore comprises at least one of the functional groups selected from a primary amine group, a secondary amine group, a hydroxyl group, and a thiol group,
wherein the colouring composition comprises 0.1 to 25 wt.% of the crosslinking agent, 0.1 to 25 wt.% of the organic chromophore, and at least 20.0 wt.% water; and/or wherein the stoichiometric ratio between the organic chromophore and the crosslinking agent is less than 1.0.

The colouring composition comprising 0.1 to 25 wt.% of the crosslinking agent, 0.1 to 15 wt.% of the organic chromophore, and at least 20.0 wt.% water, may be considered a "master batch". At relatively large amounts of the crosslinking agent and the organic chromophore, the colouring composition may be used as is for the printing of textiles which does not require any dilution. For the purpose of dyeing of textiles, the disclosed colouring composition may be further diluted. Preferably, the disclosed colouring composition is diluted with water.

In one embodiment, the organic chromophore comprises at least one of the functional groups selected from a primary amine group, a secondary amine group, a hydroxyl group, and a thiol group, which is a requirement for the reaction with the unprotected reactive isocyanate group(s) of the crosslinking agent. In one embodiment, the organic chromophore does not comprise an isocyanate group. It shall be understood that the absence of an isocyanate group includes both the absence of a protected reactive isocyanate group and the absence of an unprotected reactive isocyanate group.

In one embodiment of the colouring composition, the stoichiometric ratio between the organic chromophore and the crosslinking agent is less than 1.0 which theoretically provides that all organic chromophores can react with the crosslinking agent and, via the crosslinking agent, be bound to the textile fibres. Theoretically, there is thus no unbound organic chromophore left after printing and/or dyeing is performed. In one embodiment of the colouring composition, the stoichiometric ratio between the organic chromophore and the crosslinking agent is less than 1.0, or less than 0.95, or less than 0.9, or less than 0.85, or less than 0.8. In one embodiment of the colouring composition, the stoichiometric ratio between the organic chromophore and the crosslinking agent is more than 0.1, or more than 0.2, or more than 0.3, or more than 0.4. In one embodiment of the colouring composition, the stoichiometric ratio between the organic chromophore and the crosslinking agent is between 0.1 and 1.0, or between 0.2 and 0.95, or between 0.3 and 0.9, or between 0.4 and 0.85.

In one embodiment of the colouring composition, the two or more protected isocyanate groups are chemical structures that can form isocyanates from a precursor structure upon thermal activation via the following reaction scheme, wherein X is a protection group

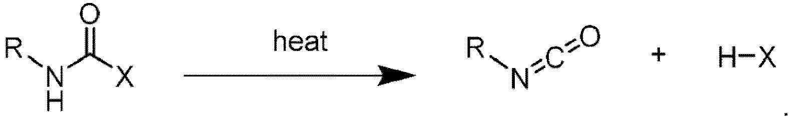

It shall be understood that the above reaction scheme depicts the concept of the protection group and the mechanism of deprotection, i.e., the rest R has no specific chemical meaning as such except that there needs to be a rest R to depict an entire molecule. A protection group provides that the protected functional moiety is temporarily protected from any unwanted reaction(s). The protection group X may also be denoted a leaving group because under defined conditions said group X may be removed in a systematic chemical fashion.

The unprotected isocyanate groups are reactive to, e.g., hydroxyl groups thus forming a urethane linkage. The unprotected isocyanate groups are also reactive to, e.g., primary amine groups, secondary amine groups, and thiol groups.

In one embodiment, the colouring composition has a shelf-life of at least one week, or at least one month, or at least three months, wherein the shelf-life means that the colouring composition remains chemically intact to at least 95 mol% with respect to the crosslinking agent and the organic chromophore. In one embodiment, the colouring composition has a shelf-life of ten years or less, or three years or less, or one year or less, or six months month or less. In one embodiment, the colouring composition has a shelf-life of one week to ten years, or one month to three years, or three months to one year. Advantageously, the colouring composition according to this disclosure is stable and can be shipped and stored without significant deterioration over relevant timescales.

In one embodiment of the colouring composition, the crosslinking agent has the following Markush formula: X-OCN-L-NCO-X,
wherein X is a protection group, and wherein L is a linker,
wherein optionally X is obtained after condensation of a blocking compound selected from the group of methyl ethyl ketoxime, diisopropyl amine, 3,5-dimethyl pyrazole, and 1,6-hexalactam, succinimide, N-methyl benzamide, and imidazole,
wherein optionally L is a substituted or unsubstituted linear, branched, or cyclic alkylene group having 1 to 30 carbon atoms, a substituted or unsubstituted arylene group having 4 to 30 carbon atoms, a substituted or unsubstituted heterocyclic group having 4 to 30 carbon atoms, wherein the substituted or unsubstituted heterocyclic group comprises -O-, -S-, and/or -NR-, where R represents a hydrogen atom, an alkyl group, an aryl group, or a heterocyclic group, - C(=O)-, -SO-, or -SO₂-, or -CH=CH-, or a combination of two or more of the foregoing structures.

In one embodiment of the colouring composition, the crosslinking agent has the following Markush formula: L(NCO-X)₃,
wherein X is a protection group, and wherein L is a linker binding three protected isocyanate groups,
wherein optionally X is obtained after condensation of a blocking compound selected from the group of methyl ethyl ketoxime, diisopropyl amine, 3,5-dimethyl pyrazole, and 1,6-hexalactam, succinimide, N-methyl benzamide, and imidazole,
wherein optionally L is a substituted or unsubstituted linear, branched, or cyclic alkylene group having 1 to 30 carbon atoms, a substituted or unsubstituted arylene group having 4 to 30 carbon atoms, a substituted or unsubstituted heterocyclic group having 4 to 30 carbon atoms, wherein the substituted or unsubstituted heterocyclic group comprises -O-, -S-, and/or -NR-, where R represents a hydrogen atom, an alkyl group, an aryl group, or a heterocyclic group, - C(=O)-, -SO-, or -SO₂-, or -CH=CH-, or a combination of two or more of the foregoing structures.

In one embodiment, the protection group X is chosen from the list of:
- compounds selected from the group of methyl ethyl ketoxime, diisopropyl amine, 3,5-dimethyl pyrazole, and 1,6-hexalactam, succinimide, N-methyl benzamide, and imidazole, which after condensation form the protection group X;
- compounds selected from the group of triazoles, e.g., 1,2,3-triazole, and 1,2,4-triazole, as well as alkyl derivatives of 1,2,3-triazole, and 1,2,4-triazole, and dialkyl derivatives of 1,2,3-triazole, and 1,2,4-triazole, which after condensation form the protection group X, wherein the alkyl group is a substituted or unsubstituted linear, branched, or cyclic alkylene group having 1 to 6 carbon atoms,
- compounds selected from the group of pyrazoles, e.g., 3,5-dimethyl pyrazole, which after condensation form the protection group X,
- compounds selected from the group of oximes, e.g., methyl methyl ketoxime, and methyl ethyl ketoxime, which after condensation form the protection group X,
- compounds selected from the group of lactames, e.g., acetolactam, propiolactam, butyrolactam, valerolactam, and caprolactam (1,6-hexalactam), which after condensation form the protection group X,
- compounds selected from the group of dimethyl amine, diethyl amine, dimethyl phosphine, diethyl phosphine, diisopropyl phosphine, dimethyl arsine, diethyl arsine, and diisopropyl arsine, which after condensation form the protection group X.

The activation temperature, also called the deblocking temperature, is dependent on the chemical nature of the protection group X, which thus becomes a leaving group upon heating. The protected isocyanate groups having a protection group X are obtained after condensation of a blocking compound selected from the group of methyl ethyl ketoxime, diisopropyl amine, 3,5-dimethyl pyrazole, and 1,6-hexalactam, succinimide, N-methyl benzamide, and imidazole, have a variable deblocking temperature between 100 °C and 170 °C.

In one embodiment, the linker L is a substituted or unsubstituted linear, branched, or cyclic alkylene group having 1 to 30 carbon atoms, a substituted or unsubstituted arylene group having 4 to 30 carbon atoms, a substituted or unsubstituted heterocyclic group having 4 to 30 carbon atoms, wherein the substituted or unsubstituted heterocyclic group comprises -O-, -S-, and/or - NR-, where R represents a hydrogen atom, an alkyl group, an aryl group, or a heterocyclic group, -C(=O)-, -SO-, or -SO₂-, or -CH=CH-, or a combination of two or more of the foregoing structures.

In one embodiment, the colouring composition further comprises an alternative crosslinking agent with the Markush formula R¹-(N=C=N)-L'-(N=C=N)-R²,
wherein optionally L' is a substituted or unsubstituted linear, branched, or cyclic alkylene group having 1 to 30 carbon atoms, a substituted or unsubstituted arylene group having 4 to 30 carbon atoms, a substituted or unsubstituted heterocyclic group having 4 to 30 carbon atoms, wherein the substituted or unsubstituted heterocyclic group comprises -O-, -S-, and/or -NR-, where R represents a hydrogen atom, an alkyl group, an aryl group, or a heterocyclic group, - C(=O)-, -SO-, or -SO₂-, or -CH=CH-, or a combination of two or more of the foregoing structures,
wherein optionally R¹ and R² are independently of each other a substituted or unsubstituted linear, branched, or cyclic alkylene group having 1 to 30 carbon atoms.

The use of an alternative crosslinking agent which comprises two or more carbodiimide moieties has the advantage that a further crosslinking agent is provided which acts according to the same principle as the crosslinking agent according to the main concept, i.e., a covalent chemical linkage between the textile fibres and the organic chromophores can be established. Advantageously, the alternative crosslinking agent comprising two or more carbodiimide moieties does not need to be heated for deprotection purposes because it may readily react with the textile fibres and/or organic chromophore. This has benefits because not every textile fibre can withstand the relatively high temperatures required for deprotection. Accordingly, a balance can be struck between the presence of the crosslinking agents of the main aspect and the alternative crosslinking agent because heating times and/or heating temperatures may be reduced for dyeing and/or printing purposes.

In one embodiment, the colouring composition further comprises one or more polymers selected from the group of polyvinyl alcohols, polyesters, polyester melamines, styrene/acrylic acid copolymers, styrene/maleic acid/alkyl acrylate copolymers, styrene/methacrylic acid copolymers, styrene/methacrylic acid/alkyl acrylate copolymers, styrene/maleic half ester copolymers, vinyl naphthalene/acrylic acid copolymers, vinyl naphthalene/maleic acid copolymers, polyacrylics, polyurethanes, hydroxyl functional polymers and salts thereof.

In one embodiment, the colouring composition further comprises one or more of:
- a UV blocker;
- a surfactant;
- a wetting agent;
- a binder;
- an antimigration agent.

In one embodiment, a UV blocker is chosen from the list of TiOz and ZnO.

Surfactants can be included in the colouring composition to reduce the surface tension of the composition. In one embodiment, the surfactant can be an anionic surfactant, a non-ionic surfactant or a cationic surfactant. In one embodiment, a surfactant is chosen from the list of sulfates, sulfonates, polyether-modified siloxanes and ethylene oxide/propylene oxide copolymers. In one embodiment, the colouring composition comprises 0.01 to 10 wt.% of a surfactant, more preferably 0.1 to 3 wt.% of a surfactant. Polyether-modified siloxanes may have the generic formula R₃-Si-O-[SiR'₂-O]ₓ-Si-R₃, wherein R and R' may be, independently of each other, methyl and/or ethyl, wherein x is between 5 and 100.

Wetting agents lower the interfacial tension of water allowing it to better spread on surfaces and to better penetrate tissue fibres. In one embodiment, a wetting agent is chosen from the list of polyether siloxane copolymers. In one embodiment, the colouring composition comprises 0.01 to 2 wt.% of a wetting agent, more preferably 0.1 to 1 wt.% of a wetting agent.

In one embodiment, the colouring composition comprises a binder.

In one embodiment, the colouring composition does not comprise a binder.

The inclusion of an antimigration agent into the colouring composition prevents migration of the dye molecules during intermediate drying so that shade variations, e.g., between front and back parts, as well as centre-selvage are prevented.

Advantageously, the colouring composition according to this disclosure is aqueous, i.e., water-based, and thus circumvents the presence of or need for organic solvents. The colouring composition is thus sustainable and more ecofriendly as compared to compositions which rely on organic solvents.

In one embodiment, the colouring composition comprises less than 1.0 wt.% of organic solvents or is devoid of organic solvents. In one embodiment, the colouring composition comprises less than 1.0 wt.% of organic solvents, or less than 0.5 wt.% of organic solvents, or less than 0.2 wt.% of organic solvents, or less than 0.1 wt.% of organic solvents. In one embodiment, the colouring composition comprises 0.00 wt.% of organic solvents or more, or 0.01 wt.% of organic solvents or more, or 0.02 wt.% of organic solvents or more, or 0.05 wt.% of organic solvents or more. In one embodiment, the colouring composition comprises 0.00 to less than 1.0 wt.% of organic solvents, or 0.01 to less than 0.5 wt.% wt.% of organic solvents, or 0.02 to less than 0.2 wt.% wt.% of organic solvents, or 0.05 to less than 0.1 wt.% wt.% of organic solvents.

In one embodiment, the colouring composition comprises 1.0 to 22.0 wt.% of the crosslinking agent, or 2.0 to 20.0 wt.% of the crosslinking agent, or 3.0 to 18.0 wt.% of the crosslinking agent, or 7.0 to 18.0 wt.% of the crosslinking agent, and 0.1 to 15 wt.% of the organic chromophore.

In one embodiment, the colouring composition comprises 0.1 wt.% of the crosslinking agent or more, or 0.3 wt.% of the crosslinking agent or more, or 1.0 wt.% of the crosslinking agent or more, or 2.0 wt.% of the crosslinking agent or more, or 3.0 wt.% of the crosslinking agent or more, or 7.0 wt.% of the crosslinking agent or more. In one embodiment, the colouring composition comprises 25.0 wt.% of the crosslinking agent or less, or 22.0 wt.% of the crosslinking agent or less, or 20.0 wt.% of the crosslinking agent or less, or 18.0 wt.% of the crosslinking agent or less. In one embodiment, the colouring composition comprises 0.1 to 25 wt.% of the crosslinking agent, or 1.0 to 22.0 wt.% of the crosslinking agent, or 2.0 to 20.0 wt.% of the crosslinking agent, or 3.0 to 18.0 wt.% of the crosslinking agent, or 7.0 to 18.0 wt.% of the crosslinking agent. Alternatively, the colouring composition comprises 7.0 to 25 wt.% of the crosslinking agent.

In one embodiment, the colouring composition comprises 0.1 to 25 wt.% of the organic chromophore, or 0.3 to 20 wt.% of the organic chromophore, or 1.0 to 15 wt.% of the organic chromophore, or 2.0 to 10.0 wt.% of the organic chromophore, or 3.0 to 8.0 wt.% of the organic chromophore. In one embodiment, the colouring composition comprises 0.1 wt.% of the organic chromophore or more, or 0.3 wt.% of the organic chromophore or more, or 1.0 wt.% of the organic chromophore or more, or 2.0 wt.% of the organic chromophore or more, or 3.0 wt.% of the organic chromophore or more. In one embodiment, the colouring composition comprises 25 wt.% of the organic chromophore or less, or 20 wt.% of the organic chromophore or less, or 15 wt.% of the organic chromophore or less, or 10.0 wt.% of the organic chromophore or less, or 8.0 wt.% of the organic chromophore or less.

In one embodiment, the colouring composition comprises at least 20.0 wt.% water, or at least 30.0 wt.% water, or at least 40.0 wt.% water, or at least 50.0 wt.% water, or at least 60.0 wt.% water, or at least 70.0 wt.% water, or at least 80.0 wt.% water, or at least 90.0 wt.% water. In one embodiment, the colouring composition comprises 99.8 wt.% water or less, or 99.5 wt.% water or less, or 99.0 wt.% water or less, or 98.0 wt.% water or less, or 95.0 wt.% water or less, or 90.0 wt.% water or less, or 80.0 wt.% water or less. In one embodiment, the colouring composition comprises 20.0 to 99.8 wt.% water, 30.0 to 99.5 wt.% water, or 40.0 to 99.0 wt.% water, or 50.0 to 98.0 wt.% water, or 60.0 to 95.0 wt.% water, or 70.0 to 90.0 wt.% water.

In one embodiment, the colouring composition comprises 0.1 to 25 wt.% of the crosslinking agent, 0.1 to 25 wt.% of the organic chromophore, and 20.0 to 99.8 wt.% water. In one embodiment, the colouring composition comprises 3.0 to 18.0 wt.% of the crosslinking agent, 0.1 to 25 wt.% of the organic chromophore, and 20.0 to 96.9 wt.% water. In one embodiment, the colouring composition comprises 7.0 to 18.0 wt.% of the crosslinking agent, 0.1 to 25 wt.% of the organic chromophore, and 20.0 to 92.9 wt.% water. In one embodiment, the colouring composition comprises 7.0 to 25.0 wt.% of the crosslinking agent, 0.1 to 25 wt.% of the organic chromophore, and 20.0 to 92.9 wt.% water. In one embodiment, the colouring composition comprises 0.1 to 25 wt.% of the crosslinking agent, 3.0 to 6.0 wt.% of the organic chromophore, and 20.0 to 96.9 wt.% water.

In one embodiment, the colouring composition comprises 0.1 wt.% of the alternative crosslinking agent or more, or 0.3 wt.% of the alternative crosslinking agent or more, or 1.0 wt.% of the alternative crosslinking agent or more, or 2.0 wt.% of the alternative crosslinking agent or more, or 3.0 wt.% of the alternative crosslinking agent or more. In one embodiment, the colouring composition comprises 15.0 wt.% of the alternative crosslinking agent or less, or 13.0 wt.% of the alternative crosslinking agent or less, or 10.0 wt.% of the alternative crosslinking agent or less, or 8.0 wt.% of the alternative crosslinking agent or less. In one embodiment, the colouring composition comprises 0.1 to 15 wt.% of the alternative crosslinking agent, or 0.3 to 13.0 wt.% of the alternative crosslinking agent, or 1.0 to 10.0 wt.% of the alternative crosslinking agent, or 2.0 to 8.0 wt.% of the alternative crosslinking agent, or 3.0 to 8.0 wt.% of the alternative crosslinking agent. Alternatively, the colouring composition comprises 0.1 to 8 wt.% of the alternative crosslinking agent.

In one embodiment, the colouring composition comprises:

| | |
|---|---|
| 0.1 to 25 wt.% | crosslinking agent |
| 0.1 to 25 wt.% | organic chromophore |
| 20.0 to 99.8 wt. % | water |

In one embodiment, the colouring composition comprises:

| | |
|---|---|
| 3.0 to 18 wt.% | crosslinking agent |
| 0.1 to 25 wt.% | organic chromophore |
| 20.0 to 96.9 wt.% | water |

In one embodiment, the colouring composition comprises:

| | |
|---|---|
| 7.0 to 18 wt.% | crosslinking agent |
| 0.1 to 25 wt.% | organic chromophore |
| 20.0 to 92.9 wt.% | water |

In one embodiment, the colouring composition comprises:

| | |
|---|---|
| 3.0 to 18 wt.% | crosslinking agent |
| 1.0 to 10 wt. % | organic chromophore |
| 20.0 to 96.0 wt.% | water |

In one embodiment, the colouring composition comprises:

| | |
|---|---|
| 3.0 to 18 wt.% | crosslinking agent |
| 2.0 to 8 wt.% | organic chromophore |
| 20.0 to 95.0 wt. % | water |

In one embodiment, the colouring composition comprises:

| | |
|---|---|
| 3.0 to 18 wt.% | crosslinking agent |
| 0.0 to 15 wt.% | alternative crosslinking agent |
| 2.0 to 8 wt.% | organic chromophore |
| 20.0 to 95.0 wt. % | water |

In one embodiment, the colouring composition comprises:

| | |
|---|---|
| 3.0 to 18 wt.% | crosslinking agent |
| 2.0 to 13 wt.% | alternative crosslinking agent |
| 2.0 to 8 wt.% | organic chromophore |
| 20.0 to 93.0 wt. % | water |

In one embodiment, the colouring composition comprises:

| | |
|---|---|
| 3.0 to 18 wt.% | crosslinking agent |
| 0.0 to 15 wt.% | alternative crosslinking agent |
| 2.0 to 8 wt.% | organic chromophore |
| 20.0 to 95.0 wt. % | water |

| | |
|---|---|
| 0.0 to 2.0 wt.% | anti-migration agent |
| 0.0 to 2.0 wt.% | non-rewetting surfactant |
| 0.0 to 2.0 wt.% | binder |

In one embodiment, the colouring composition comprises:

| | |
|---|---|
| 3.0 to 18 wt.% | crosslinking agent |
| 2.0 to 13 wt.% | alternative crosslinking agent |
| 2.0 to 8 wt.% | organic chromophore |
| 20.0 to 93.0 wt. % | water |
| 0.1 to 1.5 wt.% | anti-migration agent |
| 0.1 to 1.5 wt.% | non-rewetting surfactant |
| 0.1 to 1.5 wt.% | binder |

In one embodiment of the colouring composition, the organic chromophore is selected from the group of azo dyes, diphenylmethane, triarylmethane, xanthene, methine, e.g., polymethine, acridine, quinoline, thiazole, indamine, indophenol, azine, oxazine, thiazine, anthraquinone, indigoid, phthalocyanine chromophores, isatin dyes, naphthalimide dyes, naphthoquinone dyes, nitro dyes.

Whereas it shall be understood that the organic chromophore comprises at least one of the functional groups selected from a primary amine group, a secondary amine group, a hydroxyl group, and a thiol group, to provide a functional group that is amenable for reaction with the deprotected isocyanate groups of the crosslinking agent, the organic chromophore may be selected from the said groups which are thus to be considered as moieties which are functionalised with the said functional groups.

### Method for the printing and/or dyeing of textiles

In one aspect, this disclosure provides a method for the printing and/or dyeing of textiles comprising:
- depositing the colouring composition according to this disclosure onto a textile substrate;
- drying and/or squeezing of the textile substrate to remove water; and
- reacting the colouring composition by heat transfer to obtain a covalently modified textile substrate.

While the colouring composition according to this disclosure comprises water, the subsequent process steps after providing the colouring composition, i.e., the depositing of the colouring composition onto a textile substrate, drying and/or squeezing of the textile substrate to remove water, and reacting the colouring composition by heat transfer to obtain a covalently modified textile substrate, do not require any water or steam. The method according to this disclosure hence uses a non-aqueous application technique.

In one embodiment, the method according to this disclosure does not require any steaming and/or washing steps. In one embodiment, the method according to this disclosure does not require any washing steps and/or does not comprise any washing steps, preferably neither before nor after the depositing of the colouring composition onto the substrate.

The method according to this disclosure does not require any steaming and/or washing steps, neither before nor after the depositing of the colouring composition onto the textile substrate. This method thus represents a significant advancement in reducing water usage in textile processing. Additionally, the required energy for dyeing a textile substrate is strongly decreased thanks to a faster and more efficient fixation approach of the employed crosslinking agent as part of the colouring composition.

In one embodiment, a textile substrate is chosen from the list of cotton, polyester, polyamide, viscose, aramid, and meta-aramid. Viscose is synonymous with rayon. Viscose is a semi-synthetic fiber manufactured from natural sources of regenerated cellulose, e.g., wood and similar agricultural products. In one embodiment, a textile substrate is a blend of textile material, wherein the blend comprises two or more textile materials chosen from the list of cotton, polyester, polyamide, viscose, aramid, and meta-aramid.

In one embodiment, the textile substrate is a blend of cotton and polyester. Advantageously, this results in a fabric with enhanced comfort and performance characteristics because it combines the breathability of cotton with the durability of polyester. In one embodiment, the textile substrate is a blend of polyester and viscose, which is advantageously used, e.g., in baby wipes. In one embodiment, the textile substrate is a blend of polyester and polyamide.

Depositing the colouring composition onto a textile substrate may be performed by a variety of means known to the skilled person. In one embodiment, depositing the colouring composition onto a textile substrate may be effected by spraying. In one embodiment, depositing the colouring composition onto a textile substrate may be effected by soaking. In one embodiment, depositing the colouring composition onto a textile substrate may be effected by padding. In one embodiment, depositing the colouring composition onto a textile substrate may be effected by print-jetting. In one embodiment, depositing the colouring composition onto a textile substrate may be effected by wave-jetting. In one embodiment, depositing the colouring composition onto a textile substrate may be effected by screen-printing.

The step of drying and/or squeezing of the textile substrate to remove water avoids excess amounts of water and/or excess amounts of the colouring composition in the textile substrate before the reaction is initiated.

The step of reacting the colouring composition by heat transfer to obtain a covalently modified textile substrate is adapted to the colouring composition, and specifically to the crosslinking agent with the specific protection group, to effect a deprotection of the two or more protected isocyanate groups of the crosslinking agent. Typically, based on the specific protection group X, the heat transfer is sufficient to reach the activation temperature, also called the deblocking temperature, of the protection group X, so that the crosslinking agent in its active form, i.e., with free, and therefore reactive, isocyanate groups is provided.

In one embodiment, the reacting step involves temperature conditions which are sufficient to deprotect the crosslinking agent to provide two or more isocyanate groups, to enable a reaction between the deprotected crosslinking agent and the organic chromophore, and between the deprotected crosslinking agent and the textile substrate.

In one embodiment, the reacting step comprises heating the dried and/or squeezed textile substrate to a temperature between 100 °C and 170 °C, or to a temperature between 110 °C and 160 °C, or to a temperature between 120 °C and 150 °C. In one embodiment, the reacting step comprises heating the dried and/or squeezed textile substrate to a temperature of at least 100 °C, or to a temperature of at least 110 °C, or to a temperature of at least 120 °C. In one embodiment, the reacting step comprises heating the dried and/or squeezed textile substrate to a temperature of 170 °C or less, or to a temperature of 160 °C or less, or to a temperature of 150 °C or less.

The reaction between the deprotected crosslinking agent and the organic chromophore forms a new functional bond between the isocyanate of the crosslinking agent and the at least one of the functional groups selected from a primary amine group, a secondary amine group, a hydroxyl group, and a thiol group, of the organic chromophore. For example, an isocyanate and a hydroxyl group will form a urethane bond. Likewise, the reaction between the deprotected crosslinking agent and the textile substrate forms a new functional bond between the isocyanate of the crosslinking agent and, for example, a hydroxy group on the substrate to form a urethane bond.

In one embodiment, heat transfer comprises utilizing hot air.

In one embodiment, the method of printing and/or dyeing is selected from inkjet printing, spraying, pad/foulard, screen-printing and digital printing.

In one embodiment of the method, the textile substrate is composed of a polymeric material having reactive groups which are available to react with the two or more reactive groups of the deprotected crosslinking agent, and/or wherein the textile substrate comprises or essentially consists of cotton, polyester, polyamide, viscose, aramid, or meta-aramid.

In one embodiment, the drying and/or the heat transfer is effected by employing hot air.

### Printed textile substrate and modified textile substrate

In one aspect, this disclosure provides a printed textile substrate comprising the reacted colouring composition according to this disclosure printed thereon.

In one embodiment, the printed textile substrate is essentially free of polyurethane. Polyurethane is sticky and adheres to textile fibres which causes several disadvantages, if present. It shall be understood that the reacted colouring composition which chemically incorporates the organic chromophores via the reacted crosslinking agent into the textile fibres does not constitute a polyurethane, even if isocyanate (functional) groups are formed as part of the underlying reaction(s). For reference, a polyurethane is typically produced by reacting a polymeric isocyanate with a polyol, or, e.g., by reacting a diisocyanate compound with a diol compound.

In one embodiment, the printed textile substrate comprises a crosslinking moiety, wherein the crosslinking moiety is covalently attached via an isocyanate group to the printed textile substrate, wherein the crosslinking moiety is further covalently attached to an organic chromophore, e.g., via an isocyanate group, wherein the crosslinking moiety results from a condensation reaction of a crosslinking agent.

In one embodiment, the printed textile substrate comprises an alternative crosslinking moiety, wherein the alternative crosslinking moiety is covalently attached to the printed textile substrate, wherein the alternative crosslinking moiety is further covalently attached to an organic chromophore, wherein the alternative crosslinking moiety results from a condensation reaction of an alternative crosslinking agent.

In one embodiment, the printed textile substrate comprises the reacted colouring composition according to this disclosure printed thereon, wherein the printed textile substrate preferably has one or more of the following properties, measured in a crock test method according to ISO 105-X12:2016(E):
- a crock dry value of at least 3.0, or at least 3.5, at least 4.0, and/or
- a crock wet value of at least 1.5, or at least 2.0, or at least 2.5, or at least 3.0.

In one embodiment, the printed textile substrate has a crock dry value of at least 3.0, and a crock wet value of at least 1.5, or at least 2.0, or at least 2.5, or at least 3.0. In one embodiment, the printed textile substrate has a crock dry value of at least 3.5, and a crock wet value of at least 1.5, or at least 2.0, or at least 2.5, or at least 3.0. In one embodiment, the printed textile substrate has a crock dry value of at least 4.0, and a crock wet value of at least 1.5, or at least 2.0, or at least 2.5, or at least 3.0.

Both the crock dry value and the crock wet value are normalised to values between 0.0 and 5.0. Accordingly, a crock dry value of 5.0 is the maximum obtainable value, and a crock wet value of 5.0 is the maximum obtainable value.

In one embodiment, the crock test method was performed according to ISO 105-X12:2016(E), wherein the used cotton rubbing cloth was cut into 50 mm squares, wherein test specimens had sample sizes of 50 mm x 140 mm, wherein the weft and warp yarn direction were probed, wherein the samples were kept for 24 hours under standard atmosphere conditions before testing, wherein the rubbing cloth was prepared by soaking in distilled water to a level of 65%.

In one aspect, this disclosure provides a modified textile substrate obtainable by the method according to this disclosure.

### Use of the colouring composition

In one aspect, this disclosure provides a use of the colouring composition according to this disclosure for the printing and/or dyeing of textiles, e.g., cotton, polyester, polyamide, viscose, aramid, and meta-aramid.

The use of the colouring composition according to this disclosure for the printing and/or dyeing of textiles is advantageous for several reasons: First, improved products are obtained which have a better haptic appearance compared to products in the art. Second, the colouring composition is designed such that all organic chromophores present therein can potentially be fully reacted and thereby integrated into the textile fibre and to thus leave no traces of dye molecules behind. Consequently, there is no bleeding or washing out of unbound organic chromophores from the printed textile substrate and/or the modified textile substrate. Third, the use of the colouring composition according to this disclosure for the printing and/or dyeing of textiles enables a much more efficient process in terms of energy use and the use of water.

### Methods

Tests were performed on three types of textile substrates: 1.) 100% cotton (200 g m⁻²), 2.) 100% polyester (250 g m⁻²), 3.) 90% polyamide and 10% Lycra (synthetic rubber or natural rubber).

The following components (in wt.%) were mixed to obtain example compositions according to Table 1 (Examples 1 to 8): LA501 Imprafix 2794 (Covestro) is a blocked isocyanate crosslinking agent. BK 18 (Lamberti) is a further blocked isocyanate crosslinking agent. Hydrosin C26 (Maflon) is a carbodiimide. Impranil 545 (Covestro) is a polyurethane (PU), soft hand. FP213 Esajet 200 (Lamberti) is a further polyurethane. Reactink Orange X96 (Milliken) is a polymeric colourant. Neopat 96M is an anti-migration agent which exerts no effect on the binding of the colourant. NRW is a non-rewetting surfactant (Lamberti) which improves the penetration of the composition into the textile fibre but has no effect on the binding of the colourant.

First, a master batch was prepared using 70 wt.% H₂O initially. To this end, H₂O and a polymeric colour were mixed for 30 min at 500 rpm using an in-house dispersion disc. Subsequently, blocked isocyanate crosslinking agent was added and mixing at 250 rpm stirring was continued for 15 min. The pH values and the viscosity were assessed. The obtained mixture was then pressed through a filter with 1 µm pore size (Sartorius) at an excess pressure of 0.2 bar. Finally, H₂O is added again to balance the formulations to 100 wt.% in total.

A crock test method was performed according to ISO 105-X12:2016(E). The used apparatus was an SDLATLAS Crockmeter (model number: M23844). The used cotton rubbing cloth was cut into 50 mm squares. Grey scale was used for validation purposes and the results were kept in a log (point 4.4 of ISO 105-X12:2016(E)). Test specimens had sample sizes of 50 mm x 140 mm (point 5.1). Both directions, i.e., weft and warp yarn direction, were probed (point 5.1). Before testing the samples were kept for 24 hours under standard atmosphere conditions (point 5.3). The rubbing cloth was prepared by soaking in distilled water to a level of 65% (point 6.3).

### Examples

Table 1 shows the compositions (with components given in wt.%) of Examples 1 to 8.

Table 2 shows the results of the crock test method performed according to ISO 105-X12:2016(E) for Examples 1 to 8 on three types of textile substrates: 1.) 100% cotton (200 g m-²), 2.) 100% polyester (250 g m⁻²), 3.) 90% polyamide and 10% Lycra. For each of the Examples 1 to 8, the left column indicates the results after dyeing the textile substrates, and the right column indicates the results after dyeing, washing at 60 °C with a household laundry detergent, and subsequent drying. The dyed (and washed) textile substrates were allowed to rest for 24 h before performing the crock tests.

**Table 1: Compositions of Examples 1 to 8.**

| | Ex. 1 | Ex. 2 | Ex. 3 | Ex. 4 | Ex. 5 | Ex. 6 | Ex. 7 | Ex. 8 |
|---|---|---|---|---|---|---|---|---|
| **LA501 Imprafix 2794** | 10% | 5% | 5% | 5% | 10% | 0% | 15% | 0% |
| **Impranil 545** | | | 5% | | 5% | 5% | 0% | 0% |
| **FP213 Esajet 200** | | 10% | 0% | 5% | 0% | 0% | 0% | 0% |
| **H2O** | 70% | 70% | 70% | 70% | 70% | 70% | 70% | 70% |
| **H2O** | 8% | 3% | 8% | 8% | 8% | 8% | 8% | 8% |
| **Hydrosin C26** | 5% | 5% | 5% | 5% | 0% | 10% | 0% | 0% |
| **BK 18** | | | | | 0% | 0% | 0% | 15% |
| **Neopat 96M** | 1% | 1% | 1% | 1% | 1% | 1% | 1% | 1% |
| **NRW** | 1% | 1% | 1% | 1% | 1% | 1% | 1% | 1% |
| **Reactint Orange X96** | 5% | 5% | 5% | 5% | 5% | 5% | 5% | 5% |

**Table 2: Results of the crock test method. The crock test was performed under dry conditions and under wet conditions. A parameter value <3 indicates a fail (highlighted in bold); a parameter range between 3 to 3.5 indicates a mediocre result; a parameter value >3.5 indicates a pass.**

| | Ex. 1 | | Ex. 2 | | Ex. 3 | | Ex. 4 | | Ex. 5 | | Ex. 6 | | Ex. 7 | | Ex. 8 | |
|---|---|---|---|---|---|---|---|---|---|---|---|---|---|---|---|---|
| **100 % Cotton 200 g/m2** | | | | | | | | | | | | | | | | |
| Crock dry | 5.0 | 5.0 | 5.0 | 5.0 | 5.0 | 4.5 | 5.0 | 5.0 | 4.0 | 5.0 | 4.5 | 4.0 | 5.0 | 5.0 | 5.0 | 4.5 |
| Crock wet | 3.5 | 4.5 | 3.5 | 4.0 | 3.5 | 3.5 | 3.5 | 4.0 | 3.5 | 4.5 | **2.0** | **1.5** | 4.0 | 4.5 | 3.5 | 4.5 |

| **100 % Polyester 250 g/m2** | | | | | | | | | | | | | | | | |
|---|---|---|---|---|---|---|---|---|---|---|---|---|---|---|---|---|
| Crock dry | 4.0 | 4.5 | 4.0 | 4.5 | 4.0 | 4.5 | 4.0 | 4.5 | 4.0 | 4.5 | 3.5 | 3.5 | 4.0 | 4.5 | 4.5 | 4.5 |
| Crock wet | 3.5 | 4.5 | 3.0 | 4.5 | **2.5** | 4.5 | 3.0 | 4.5 | 3.5 | 4.5 | **2.0** | **1.0** | 3.0 | 4.5 | 4.5 | 4.5 |

| **90 % Polyamide** * **10 % Lycra** | | | | | | | | | | | | | | | | |
|---|---|---|---|---|---|---|---|---|---|---|---|---|---|---|---|---|
| Crock dry | 4.5 | 5.0 | 3.5 | 4.0 | 3.5 | 4.0 | 3.5 | 3.0 | 4.0 | 4.5 | 3.5 | **2.0** | 4.5 | 4.5 | 4.5 | 4.5 |
| Crock wet | 3.0 | 4.5 | **1.5** | 3.0 | **1.5** | 4.0 | **1.5** | 3.5 | **2.0** | 4.5 | **2.0** | **1.0** | 3.0 | 4.5 | 3.5 | 4.5 |

## Claims

1. Colouring composition for the printing and/or dyeing of textiles, e.g., cotton, polyester, polyamide, viscose, aramid, and meta-aramid, comprising:
a) a crosslinking agent;
b) an organic chromophore; and
c) water,
wherein the crosslinking agent comprises two or more protected isocyanate groups,
wherein the organic chromophore comprises at least one of the functional groups selected from a primary amine group, a secondary amine group, a hydroxyl group, and a thiol group,
wherein the colouring composition comprises 0.1 to 25 wt.% of the crosslinking agent, 0.1 to 25 wt.% of the organic chromophore, and at least 20.0 wt.% water; and/or
wherein the stoichiometric ratio between the organic chromophore and the crosslinking agent is less than 1.0.

2. Colouring composition according to claim 1, wherein the colouring composition has a shelf-life of at least one week, or at least one month, or at least three months, wherein the shelf-life means that the colouring composition remains chemically intact to at least 95 mol% with respect to the crosslinking agent and the organic chromophore.

3. Colouring composition according to claim 1 or claim 2, wherein the crosslinking agent has the following Markush formula: X-OCN-L-NCO-X,
wherein X is a protection group, and wherein L is a linker,
wherein optionally X is obtained after condensation of a blocking compound selected from the group of methyl ethyl ketoxime, diisopropyl amine, 3,5-dimethyl pyrazole, and 1,6-hexalactam, succinimide, N-methyl benzamide, and imidazole,
wherein optionally L is a substituted or unsubstituted linear, branched, or cyclic alkylene group having 1 to 30 carbon atoms, a substituted or unsubstituted arylene group having 4 to 30 carbon atoms, a substituted or unsubstituted heterocyclic group having 4 to 30 carbon atoms, wherein the substituted or unsubstituted heterocyclic group comprises -O-, -S-, and/or -NR-, where R represents a hydrogen atom, an alkyl group, an aryl group, or a heterocyclic group, -C(=O)-, -SO-, or -SO₂-, or -CH=CH-, or a combination of two or more of the foregoing structures.

4. Colouring composition according to any one of the preceding claims, wherein the crosslinking agent has the following Markush formula: L(NCO-X)₃,
wherein X is a protection group, and wherein L is a linker binding three protected isocyanate groups,
wherein optionally X is obtained after condensation of a blocking compound selected from the group of methyl ethyl ketoxime, diisopropyl amine, 3,5-dimethyl pyrazole, and 1,6-hexalactam, succinimide, N-methyl benzamide, and imidazole,
wherein optionally L is a substituted or unsubstituted linear, branched, or cyclic alkylene group having 1 to 30 carbon atoms, a substituted or unsubstituted arylene group having 4 to 30 carbon atoms, a substituted or unsubstituted heterocyclic group having 4 to 30 carbon atoms, wherein the substituted or unsubstituted heterocyclic group comprises -O-, -S-, and/or -NR-, where R represents a hydrogen atom, an alkyl group, an aryl group, or a heterocyclic group, -C(=O)-, -SO-, or -SO₂-, or -CH=CH-, or a combination of two or more of the foregoing structures.

5. Colouring composition according to any one of the preceding claims, further comprising an alternative crosslinking agent with the Markush formula R¹-(N=C=N)-L'-(N=C=N)-R²,
wherein optionally L' is a substituted or unsubstituted linear, branched, or cyclic alkylene group having 1 to 30 carbon atoms, a substituted or unsubstituted arylene group having 4 to 30 carbon atoms, a substituted or unsubstituted heterocyclic group having 4 to 30 carbon atoms, wherein the substituted or unsubstituted heterocyclic group comprises -O-, -S-, and/or -NR-, where R represents a hydrogen atom, an alkyl group, an aryl group, or a heterocyclic group, -C(=O)-, -SO-, or -SO₂-, or -CH=CH-, or a combination of two or more of the foregoing structures,
wherein optionally R¹ and R² are independently of each other a substituted or unsubstituted linear, branched, or cyclic alkylene group having 1 to 30 carbon atoms.

6. Colouring composition according to any one of the preceding claims, further comprising one or more polymers selected from the group of polyvinyl alcohols, polyesters, polyester melamines, styrene/acrylic acid copolymers, styrene/maleic acid/alkyl acrylate copolymers, styrene/methacrylic acid copolymers, styrene/methacrylic acid/alkyl acrylate copolymers, styrene/maleic half ester copolymers, vinyl naphthalene/acrylic acid copolymers, vinyl naphthalene/maleic acid copolymers, polyacrylics, **polyurethanes,** hydroxyl functional polymers and salts thereof.

7. Colouring composition according to any one of the preceding claims, further comprising one or more of:
- a UV blocker;
- a surfactant;
- a wetting agent;
- a binder;
- an antimigration agent.

8. Colouring composition according to any one of the preceding claims, with the proviso that the colouring composition has less than 1.0% (w/w) of organic solvents or is devoid of organic solvents.

9. Colouring composition according to any one of the preceding claims, comprising 1.0 to 22.0 wt.% of the crosslinking agent, more preferably 2.0 to 20.0 wt.% of the crosslinking agent, yet more preferably 3.0 to 18.0 wt.% of the crosslinking agent, most preferably 7.0 to 18.0 wt.% of the crosslinking agent, and 0.1 to 15 wt.% of the organic chromophore.

10. Colouring composition according to any one of the preceding claims, wherein the organic chromophore is selected from the group of azo dyes, diphenylmethane, triarylmethane, xanthene, methine, e.g., polymethine, acridine, quinoline, thiazole, indamine, indophenol, azine, oxazine, thiazine, anthraquinone, indigoid, phthalocyanine chromophores, isatin dyes, naphthalimide dyes, naphthoquinone dyes, nitro dyes.

11. A method for the printing and/or dyeing of textiles comprising:
- depositing the colouring composition according to any one of claims 1 to 10 onto a textile substrate;
- drying and/or squeezing of the textile substrate to remove water; and
- reacting the colouring composition by heat transfer to obtain a covalently modified textile substrate.

12. The method of claim 11, wherein the reacting step involves temperature conditions which are sufficient to deprotect the crosslinking agent to provide two or more isocyanate groups, to enable a reaction between the deprotected crosslinking agent and the organic chromophore, and between the deprotected crosslinking agent and the textile substrate.

13. The method of claim 11 or claim 12, wherein the method of printing and/or dyeing is selected from inkjet printing, spraying, and pad/foulard.

14. The method according to any one of claims 11 to 13, wherein the textile substrate is composed of a polymeric material having reactive groups which are available to react with the two or more reactive groups of the deprotected crosslinking agent, and/or wherein the textile substrate comprises or essentially consists of cotton, polyester, polyamide, viscose, aramid, or meta-aramid.

15. The method according to any one of claims 11 to 14, wherein the drying and/or the heat transfer is effected by employing hot air.

16. A printed textile substrate comprising the reacted colouring composition according to any one of claims 1 to 10 printed thereon, wherein the printed textile substrate preferably has one or more of the following properties, measured in a crock test method according to ISO 105-X12:2016(E):
- a crock dry value of at least 3.0, or at least 3.5, at least 4.0, and/or
- a crock wet value of at least 1.5, or at least 2.0, or at least 2.5, or at least 3.0.

17. The modified textile substrate obtainable by the method according to any one of claims 11 to 15.

18. Use of the colouring composition according to any one of claims 1 to 10 for the printing and/or dyeing of textiles, e.g., cotton, polyester, polyamide, viscose, aramid, and meta-aramid.
